# EUROPÄISCHE PATENTSCHRIFT

(11) **EP 2 307 187 B1**
(45) Veröffentlichungstag und Bekanntmachung des Hinweises auf die Patenterteilung: **31.10.2012**
(21) Anmeldenummer: 09781155.8
(22) Anmeldetag: 28.07.2009
(51) Int. Cl.: B29C 65/00, B23K 26/00, B29C 45/14, B29C 70/68

(54) **BAUTEILVERBUND SOWIE VERFAHREN ZUM HERSTELLEN EINES BAUTEILVERBUNDES**
COMPONENT COMPOSITE AND METHOD FOR MANUFACTURING A COMPONENT COMPOSITE
ÉLÉMENT COMPOSITE ET PROCÉDÉ DE FABRICATION D'UN ÉLÉMENT COMPOSITE

(30) Priorität: 28.07.2008 DE 102008040782
(43) Veröffentlichungstag der Anmeldung: 13.04.2011
(73) Patentinhaber: Robert Bosch GmbH, 70442 Stuttgart (DE)
(72) Erfinder: MAIER, Martin, 71696 Moeglingen (DE); AICHELE, Wilfried, 71364 Winnenden (DE); HAUTMANN, Nikolaus, 71254 Ditzingen (DE); HONER, Michael, 70839 Gerlingen (DE); LANDER, Juergen, 70563 Stuttgart (DE); KOENIG, Jens, 71706 Markgroeningen (DE)
(86) Internationale Anmeldenummer: PCT/EP2009/059701
(87) Internationale Veröffentlichungsnummer: WO 2010/012705

(56) Entgegenhaltungen:
- DE-A1-102006 015 520
- DE-C1- 19 523 900
- US-A1- 2008 070 001
- TSUKAMOTO M ET AL: "Periodic microstructures produced by femtosecond laser irradiation on titanium plate" VACUUM, PERGAMON PRESS, GB, Bd. 80, Nr. 11-12, 7. September 2006 (2006-09-07), Seiten 1346-1350, XP025009629 ISSN: 0042-207X [gefunden am 2006-09-07]
- SPADARO ET AL: "Laser surface treatments for adhesion improvement of aluminium alloys structural joints" RADIATION PHYSICS AND CHEMISTRY, ELSEVIER SCIENCE PUBLISHERS BV., AMSTERDAM, NL, Bd. 76, Nr. 8-9, 24. Mai 2007 (2007-05-24), Seiten 1441-1446, XP022094667 ISSN: 0969-806X
- GENDLER ET AL: "Improvement of adhesive bonding strength in sealed anodized aluminium through excimer laser prebond treatment" JOURNAL OF MATERIALS SCIENCE, Bd. 29, 15. März 1994 (1994-03-15), Seiten 1521-1526, XP002550540

## Beschreibung

### Stand der Technik

Die Erfindung betrifft einen Bauteilverbund gemäß dem Oberbegriff des Anspruchs 1 sowie ein Verfahren zum Herstellen eines Bauteilverbundes gemäß dem Oberbegriff des Anspruchs 10.

Bekannt ist das Umspritzen von Metallteilen mit Kunststoff, wobei an den Metallteilen makroskopische Strukturen mit Hinterschneidungen, wie beispielsweise Rippen oder einer Waffelstruktur, vorgesehen sind, um einen Formschluss mit dem Kunststoffmaterial zu ermöglichen. Obwohl die zum Einsatz kommenden thermosplastischen Kunststoffe nicht an dem Metall haften, kann bei geschickter Ausnutzung von Schwindungsspannungen anfänglich eine Gasdichtigkeit des Bauteilverbundes erreicht werden. Diese Gasdichtigkeit ist jedoch insbesondere bei Temperatur- und/oder Lastwechsel oder bei Medieneinfluss temporär.

Aus Patentschriften der Firma TaiseiPlas ist ferner bekannt, die Oberfläche von Metallteilen chemisch zu strukturieren und im Anschluss ein Kunststoffbauteil im Spritzgussverfahren an die derart strukturierte Oberfläche anzuspritzen.

Aus der DE 10 2004 034 824 B4 ist eine metallische Flachdichtung mit mindestens einer metallischen Dichtungslage bekannt. Die metallische Dichtungslage ist dabei mit einer mittels Laserstrahlung erzeugten Oberflächenstruktur versehen, auf die elastomeres Material aufgebracht wird. Dokument DE 195 23 900 C1 offenbart einen Bauteilverbund gemäß dem Oberbegriff des Anspruchs 1 und ein Verfahren gemäß dem Oberbegriff des Anspruchs 10.

### Offenbarung der Erfindung

### Technische Aufgabe

Der Erfindung liegt die Aufgabe zugrunde, einen alternativen Bauteilverbund herzustellen, der sich durch eine besondere Robustheit auszeichnet. Bevorzugt soll der Bauteilverbund zuverlässig und dauerhaft gasdicht sein. Ganz besonders bevorzugt soll der Bauteilverbund zum Verbinden eines Bauteils aus einem thermoplastischen Kunststoff mit einem weiteren Bauteil, insbesondere durch Umspritzen, geeignet sein. Ferner besteht die Aufgabe darin, ein Verfahren zum Herstellen eines entsprechend optimierten Bauteilverbundes vorzuschlagen.

### Technische Lösung

Diese Aufgabe wird hinsichtlich des Bauteilverbundes mit den Merkmalen des Anspruchs 1 und hinsichtlich des Herstellungsverfahrens mit den Merkmalen des Anspruchs 10 gelöst. Vorteilhafte Weiterbildungen der Erfindung sind in den Unteransprüchen angegeben.

Der Erfindung liegt der Gedanke zugrunde, die Oberfläche des ersten Bauteils des Bauteilverbundes vor dem Fügen der beiden Bauteile unter Einsatz von elektromagnetischer Strahlung derart zu strukturieren, dass eine Oberflächenstruktur resultiert, die neben einer Mikrostruktur eine Nanostruktur aufweist. Dabei ist die Nanostruktur derart anzuordnen, dass diese sich auf der Mikrostruktur befindet, also derart, dass die Mikrostruktur von der Nanostruktur überlagert ist. Ein derart oberflächenstrukturiertes Bauteil gewährleistet in einem Bauteilverbund eine verbesserte Haftung zwischen den mindestens zwei aneinander anliegenden Bauteilen, wobei die beiden aneinander anliegenden Bauteile, insbesondere in einem Bereich außerhalb der Oberflächenstruktur des ersten Bauteils formschlüssig miteinander verbunden sind, um einen besonders robusten Bauteilverbund zu erhalten. Der Formschluss wird durch zumindest teilweises Umspritzen hergestellt, wobei in diesem Fall durch die zusätzlich zum Formschluss realisierte, auf der Oberflächenstruktur basierende Haftung eine erhöhte Festigkeit und Dichtheit auch nach der Temperatur- und/oder Lastwechsel und/oder Medienlagerung erreicht wird.

Die Anordnung einer wie beschrieben ausgebildeten Oberflächenstruktur in einem Bauteilverbund gewährleistet bei entsprechendem Bauteilmaterial eine Gasdichtheit, die auch bei Temperatur- und/oder Lastwechsel sowie bei, insbesondere aggressivem, Medieneinfluss Bestand hat. Im Gegensatz zu dem aus der DE 10 2004 034 824 B4 bekannten Metall-Elastomerverbund eignet sich der nach dem Konzept der Erfindung ausgebildete Bauteilverbund insbesondere auch für eine Bauteilkombination, bei der zumindest eines der Bauteile aus einem thermoplastischen Kunststoff ausgebildet ist. Es ist auch eine Ausführungsform mit duroplastischem Kunststoff realisierbar.

In Weiterbildung der Erfindung ist mit Vorteil vorgesehen, dass Mikrostrukturelemente der Mikrostruktur einen Durchmesser aus einem Größenbereich zwischen etwa 1µm und etwa 999µm aufweisen. Besonders bevorzugt weisen die Nanostrukturelemente der Nanostruktur zusätzlich oder alternativ einen Durchmesser aus einem Größenbereich zwischen etwa 1nm und etwa 999nm auf.

Besonders bevorzugt wird als elektromagnetische Strahlung zur Erzeugung der Oberflächenstruktur Laserstrahlung eingesetzt. Ganz besonders bevorzugt kommt hierzu ein Ultrakurzpulslaser zum Einsatz, wobei es weiter bevorzugt ist, wenn die Oberflächenstruktur unter Einfluss von einem Prozessmedium zur Erhöhung der Effizienz und/oder zur Passivierung erzeugt wird. Mit Vorteil wird dabei Prozessgas, insbesondere Inertgas eingesetzt. Ganz besonders bevorzugt handelt es sich bei dem Prozessgas um Helium oder Argon, das die Bildung einer Oxidschicht auf dem ersten, vorzugsweise aus Stahl oder Aluminium bestehenden Bauteil verhindert.

In Weiterbildung der Erfindung ist mit Vorteil vorgesehen, dass die Strahlungswellenlänge der eingesetzten elektromagnetischen Strahlung, insbesondere der Laserstrahlung, aus einem Wertebereich zwischen etwa 10nm und etwa 11µm gewählt ist. Ganz besonders bevorzugt ist die Wellenlänge aus einem Wellenlängenbereich zwischen etwa 200nm und etwa 1500nm gewählt. Zusätzlich oder alternativ ist bevorzugt, die Strahlungspulsdauer, insbesondere die Laserstrahlpulsdauer, aus einem Wertebereich zwischen etwa 10fs bis etwa 10µs, besonders bevorzugt zwischen etwa 100fs und etwa 100ps zu wählen. Durch die Wahl entsprechender Strahlungsparameter kann die gewünschte Oberflächenstruktur mit einer von einer Nanostruktur überlagerten Mikrostruktur geschaffen werden.

Besonders bevorzugt ist eine Materialpaarung des Bauteilverbunds, bei der das erste Bauteil aus Metall, insbesondere aus Stahl, und das zweite Bauteil aus Kunststoff, insbesondere aus thermoplastischem oder duroplastischem Kunststoff, ausgebildet ist, wobei es weiter bevorzugt ist, wenn das erste Bauteil von dem zweiten, zumindest abschnittsweise, vorzugsweise vollständig, aus Kunststoff bestehenden Bauteil zur Herstellung einer formschlüssigen Verbindung umspritzt ist. Auf eine derartige Bauteilpaarung ist die Erfindung jedoch nicht beschränkt. Besonders bevorzugt ist es, wenn das erste Bauteil, zumindest abschnittsweise, vorzugsweise vollständig aus Metall und/oder Keramik und/oder Kunststoff und/oder Halbleitermaterial und/oder das zweite Bauteil, zumindest abschnittsweise, vorzugsweise vollständig aus Kunststoff ausgebildet ist. Die durch die Oberflächenstruktur hervorgerufene Haftung bewirkt dabei eine besonders zuverlässige, feste Verbindung, die besonders bevorzugt durch Formschluss unterstützt wird.

Besonders bevorzugt ist eine Ausführungsform, bei der das erste und das zweite Bauteil, zumindest näherungsweise, gleiche thermische Ausdehnungskoeffizienten aufweisen, um eine Dichtheit noch zuverlässiger bei Temperaturschwankungen gewährleisten zu können.

Besonders bevorzugt ist der Bauteilverbund Bestandteil eines Kraftstoffeinspritzsystems. Auch ist es möglich ein Stanzgitter, insbesondere in einem Steuergerät, in einem Sensor oder in einem elektrischen Stecker mit einem zuvor beschriebenen Bauteilverbund auszubilden. Besonders bevorzugt ist es, wenn der Bauteilverbund als kunststoffumspritzte (Metall-)Buchse ausgebildet ist, die bevorzugt zum Befestigen eines Kunststoffgehäuses dient. Ferner ist es vorteilhaft, wenn der Bauteilverbund Bestandteil eines Flexleiters oder eines umspritzten Keramikteils, insbesondere für eine Lambdasonde eines Verbrennungsmotors ist.

Die Erfindung führt auch auf ein Verfahren zum Herstellen eines Bauteilverbundes, insbesondere eines zuvor beschriebenen Bauteilverbundes. Das Verfahren umfasst dabei das Strukturieren einer Kontaktoberfläche eines ersten Bauteils vor dem Fügen des ersten Bauteils mit einem zweiten Bauteil. Kern des erfindungsgemäßen Verfahrens ist es, dass eine Oberflächenstruktur auf dem ersten Bauteil geschaffen wird, die eine von einer Nanostruktur überlagerte Mikrostruktur aufweist, um somit die Festigkeit und/oder die Dichtheit der resultierenden Verbindung zu verbessern.

Ganz besonders bevorzugt ist es, wenn die Oberflächenstrukturierung mit Hilfe elektromagnetischer Strahlung, vorzugsweise unter Einfluss eines Prozessmediums, insbesondere unter Prozessgasatmosphäre erfolgt, um die Bauteiloberfläche chemisch zu verändern, beispielsweise zu passivieren, und die Strukturierungseffizienz zu erhöhen.

In Weiterbildung der Erfindung ist mit Vorteil vorgesehen, dass zum Erzeugen der Oberflächenstruktur ein Ultrakurzpulslaser eingesetzt wird.

Das zweite Bauteil wird mit dem ersten Bauteil, vorzugsweise durch Umspritzen des ersten Bauteils formschlüssig verbunden, um zusätzlich zur von der Oberflächenstrukturierung herrührenden Adhäsion einen stabilen Formschluss zu gewährleisten.

Ganz besonders bevorzugt ist eine Ausführungsform, bei der das strukturierte erste Bauteil zumindest bis zum Fügen des zweiten Bauteils unter Inertgas, insbesondere unter Stickstoffatmosphäre gelagert wird, um eine Oxidation der Oberflächenstruktur zu vermeiden. Ganz besonders bevorzugt erfolgt auch das Fügen des zweiten Bauteils, insbesondere durch zumindest teilweise Umspritzen des ersten Bauteils, unter Inertgasatmosphäre oder Vakuum.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: in einer perspektivischen Ansicht ein erstes Bauteil mit einer Oberflächenstruktur,
- Fig. 2:: ein vergrößertes, die Oberflächenstruktur schematisch darstellendes Detail aus Fig. 1 und
- Fig. 3:: einen Bauteilverbund, in einer geschnitten Seitenansicht, umfassend das in Fig. 1 gezeigte erste Bauteil sowie ein zweites Bauteil.

### Ausführungsformen der Erfindung

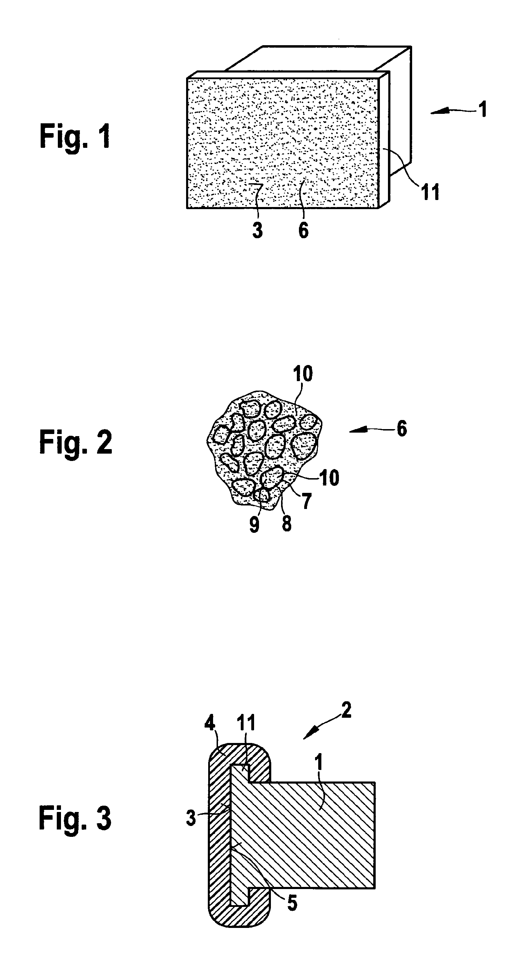

In Fig. 1 ist ein erstes Bauteil 1 als Bestandteil eines in Fig. 3 gezeigten Bauteilverbundes 2 gezeigt.

Das erste Bauteil 1 ist in dem gezeigten Ausführungsbeispiel aus einer Aluminiumlegierung ausgebildet und umfasst eine erste Kontaktoberfläche 3 mit der das erste Bauteil 1 in dem in Fig. 3 gezeigten Bauteilverbund 2 an einem zweiten Bauteil 4, genauer an einer zweiten Kontaktoberfläche 5 des zweiten Bauteils 4, anliegt.

Das erste Bauteil 1, genauer die erste Kontaktoberfläche 3, ist mit einer Oberflächenstruktur 6 versehen. Diese ist schematisch in Fig. 2 in einer vergrößerten Darstellung gezeigt. Wie sich aus Fig. 1 ergibt, ist die erste Kontaktfläche 3 vollflächig mit der Oberflächenstruktur 6 versehen. Die in Fig. 2 gezeigte Oberflächenstruktur 6 umfasst eine Mikrostruktur 7 mit wulstigen und/oder vertieften Mikrostrukturelementen 8. Die Mikrostrukturelemente 8 sind mit Nanostrukturelementen 9 und einer Nanostruktur 10 versehen, die sich auch im Bereich außerhalb der Mikrostrukturelemente 8 befindet. Durch die nano-/mikro-strukturierte Bauteiloberfläche (erste Kontaktfläche 3) wirken zwischen dem ersten Bauteil 1 und dem zweiten Bauteil 4 in dem in Fig. 3 gezeigten Bauteilverbund 2 Haftkräfte.

Zum Herstellen der Oberflächenstruktur 6 wird zunächst die unstrukturierte erste Kontaktfläche 3 mittels eines gepulsten Laserstrahls bestrahlt. Dabei wird der Laserstrahl mittels eines Scannersystems derart abgelenkt, dass er den zu strukturierenden Bereich des ersten Bauteils 1 abrastert. Zum Erzeugen der gewünschten Oberflächenstruktur kann dabei ein Femto-, Piko-, oder Nanosekunden-Laser, vorzugsweise mit einer hohen Pulsfolgefrequenz, eingesetzt werden. Der Strukturierungsprozess zur Herstellung der in Fig. 2 gezeigten Oberflächenstruktur 6 erfolgt bevorzugt unter Prozessgas, um die Ausbildung einer Oxidschicht auf dem aus Aluminium oder Stahl ausgebildeten ersten Bauteil 1 zu beeinflussen. Bevorzugt beträgt der Vorschub, mit der sich der Laserstrahl relativ zu dem ersten Bauteil 1 auf der ersten Kontaktoberfläche 3 bewegt, zwischen 100mm/s und 10.000mm/s.

Zur Herstellung des in Fig. 3 gezeigten Bauteilverbundes 2 wird das erste Bauteil 1, genauer die erste Kontaktoberfläche 3 mit ihrer Oberflächenstruktur 6, mit dem zweiten, aus thermoplastischen Kunststoff bestehenden, Bauteil 4 umspritzt. Der Formschluss zwischen den beiden Bauteilen 1, 4 wird dadurch gewährleistet, dass das zweite Bauteil 4 einen Umfangsbund 11 des ersten Bauteils 1 umgreift. Alternativ können am ersten Bauteil 1 beispielsweise von dem zweiten Bauteil 4 umspritzte Laschen, etc. vorgesehen werden. Besonders bevorzugt ist das zweite Bauteil 4. Besonders bevorzugt ist das zweite Bauteil 4 aus glasfaser- und/oder mineralverstärkten Kunststoffen, bevorzugt thermoplastischen Kunststoffen oder Duroplasten, besonders bevorzugt aus thermoplastischen Materialien mit 30 bis 60 Gewichts-Prozent Glasfaser- und/oder Mineralstoffanteil. Beispielsweise eignen sich für Bauteilverbunde unter Medieneinfluss Formassen auf der Basis von Polyphenylensulfid.

## Patentansprüche

1. Bauteilverbund, insbesondere für Kraftfahrzeuganwendungen, umfassend ein erstes Bauteil (1) mit einer ersten Kontaktoberfläche (3) und mindestens ein zweites Bauteil (4) mit einer an der ersten Kontaktoberfläche (3) anliegenden zweiten Kontaktoberfläche (5), wobei die erste Kontaktoberfläche (3) eine mittels elektromagnetischer Strahlung erzeugte Oberflächenstruktur (6) aufweist, wobei die Oberflächenstruktur (6) eine von einer Nanostruktur (10) überlagerte Mikrostruktur (7) aufweist,
**dadurch gekennzeichnet,**
**dass** die zweite Kontaktoberfläche (5), vorzugsweise das gesamte zweite Bauteil (4), aus Kunststoff, insbesondere einem thermoplastischen Kunststoff ausgebildet ist und dass das erste Bauteil (1), zumindest abschnittsweise, von dem zweiten Bauteil (4) derart umspritzt ist, dass das erste Bauteil (1) mit dem zweiten Bauteil (4) formschlüssig verbunden ist.

2. Bauteilverbund nach Anspruch 1,
**dadurch gekennzeichnet,**
**dass** die Mikrostruktur (7) Mikrostrukturelemente (8) mit einem Durchmesser aus einem Größenbereich zwischen etwa 1µm bis etwa 999µm und/oder die Nanostruktur (10) Nanostrukturelemente (9) mit einem Durchmesser aus einem Größenbereich zwischen etwa 1nm und etwa 999nm aufweist.

3. Bauteilverbund nach einem der Ansprüche 1 oder 2,
**dadurch gekennzeichnet,**
**dass** die Oberflächenstruktur (6) mittels eines Lasers mit einer Pulsdauer zwischen 100fs und 100ps, vorzugsweise unter einer Prozessmediumumgebung, bevorzugt unter einer Prozessgasatmosphäre, erzeugt ist.

4. Bauteilverbund nach einem der vorhergehenden Ansprüche,
**dadurch gekennzeichnet,**
**dass** die Oberflächenstruktur (6) mit einer Strahlungswellenlänge aus einem Bereich zwischen etwa 10nm und etwa 11µm, besonders bevorzugt zwischen etwa 200nm und etwa 1500 nm, und/oder mit einer Strahlungspulsdauer aus einem Bereich zwischen etwa 100fs und etwa 10µs, besonders bevorzugt zwischen etwa 10fs und etwa 100ps, erzeugt ist.

5. Bauteilverbund nach einem der vorhergehenden Ansprüche,
**dadurch gekennzeichnet,**
**dass** die erste Kontaktoberfläche (3) aus Metall und/oder Keramik und/oder Kunststoff, insbesondere thermoplastischen Kunststoff, oder Duroplast und/oder Halbleitermaterial und die zweite Kontaktoberfläche (5) aus thermoplastischen Kunststoff, oder Duroplast ausgebildet ist.

6. Bauteilverbund nach einem der vorhergehenden Ansprüche,
**dadurch gekennzeichnet,**
**dass** der Bauteilverbund (2), zumindest zwischen den Kontaktoberflächen (3, 5), haftvermittlerfrei ist.

7. Bauteilverbund nach einem der vorhergehenden Ansprüche,
**dadurch gekennzeichnet,**
**dass** das erste und das zweite Bauteil (1, 4) zumindest näherungsweise gleiche thermische Ausdehnungskoeffizienten aufweisen.

8. Bauteilverbund nach einem der vorhergehenden Ansprüche,
**dadurch gekennzeichnet,**
**dass** die erste Kontaktoberfläche (3) vollflächig mit der Oberflächenstruktur (6) versehen ist.

9. Bauteilverbund nach einem der vorhergehenden Ansprüche,
**dadurch gekennzeichnet,**
**dass** der Bauteilverbund (2) Bestandteil eines Kraftstoffeinspritzventils, oder eines Stanzgitters, insbesondere in einem Steuergerät, in einem Sensor oder in einem Stecker, oder Bestandteil eines Flexleiters, oder Bestandteil eines umspritzen Keramikteils, insbesondere für eine Lambdasonde, einer kunststoffumspritzten Buchse, vorzugsweise zum Befestigen eines Kunststoffgehäuses, insbesondere eines Steuergerätes, eines Sensors oder eines Steckers, ist.

10. Verfahren zum Herstellen eines Bauteilverbundes (2), vorzugsweise nach einem der vorhergehenden Ansprüche, umfassend ein erstes Bauteil (1) mit einer ersten Kontaktoberfläche (3) und mindestens ein zweites Bauteil (4), wobei die erste Kontaktfläche (3) mittels elektromagnetischer Strahlung mit einer Oberflächenstruktur (6) versehen wird, wobei die Oberflächenstruktur (6) derart erzeugt wird, dass diese eine von einer Nanostruktur (10) überlagerte Mikrostruktur (7) aufweist,
**dadurch gekennzeichnet,**
**dass** das erste Bauteil (1) nach der Oberflächenstrukturierung mit dem zweiten Bauteil (4) durch zumindest abschnittsweises Umspritzen des ersten Bauteils (1) mit dem zweiten Bauteil (4) formschlüssig verbunden wird, wobei das zweite Bauteil (4) zumindest abschnittsweise aus Kunststoffmaterial, insbesondere einem thermoplastischen Material, ausgebildet wird.

11. Verfahren nach Anspruch 10,
**dadurch gekennzeichnet,**
**dass** die Oberflächenstrukturierung unter einem Prozessmedium, insbesondere unter einer Prozessgasathmosphäre, vorzugsweise zur Passivierung und/oder Effizienzerhöhung, erzeugt wird.

12. Verfahren nach einem der Ansprüche 10 oder 11,
**dadurch gekennzeichnet,**
**dass** die Oberflächenstruktur (6) mit einem Laser mit einer Pulsdauer zwischen 100fs und 100ps erzeugt wird.

13. Verfahren nach einem der vorhergehenden Ansprüche 10 bis 12,
**dadurch gekennzeichnet,**
**dass** das strukturierte erste Bauteil (1) bis zum Fügen des zweiten Bauteils (4), vorzugsweise auch während des Fügens, insbesondere durch Umspritzen, unter Inertgasatmosphäre, insbesondere unter Stickstoffatmosphäre, gelagert ist.

## Claims

1. Component composite, in particular for motor vehicle applications, comprising a first component (1) with a first contact surface (3) and at least one second component (4) with a second contact surface (5) which bears against the first contact surface (3), wherein the first contact surface (3) has a surface structure (6) produced by means of electromagnetic radiation, the surface structure (6) having a microstructure (7) overlaid by a nanostructure (10),
**characterized**
**in that** the second contact surface (5), preferably the entire second component (4), is formed from plastic, in particular a thermoplastic, and in that the first component (1), at least in certain portions, is encapsulated with the second component (4) by injection moulding, in such a manner that the first component (1) is connected to the second component (4) in a positively locking manner.

2. Component composite according to Claim 1,
**characterized**
**in that** the microstructure (7) has microstructure elements (8) with a diameter from a range of between approximately 1 µm and approximately 999 µm and/or the nanostructure (10) has nanostructure elements (9) with a diameter from a range of between approximately 1 nm and approximately 999 nm.

3. Component composite according to either of Claims 1 and 2,
**characterized**
**in that** the surface structure (6) is produced by means of a laser with a pulse duration of between 100 fs and 100 ps, preferably under a process medium environment, preferably under a process gas atmosphere.

4. Component composite according to one of the preceding claims,
**characterized**
**in that** the surface structure (6) is produced using a radiation wavelength from a range of between approximately 10 nm and approximately 11 µm, particularly preferably between approximately 200 nm and approximately 1500 nm, and/or using a radiation pulse duration from a range of between approximately 100 fs and approximately 10 µs, particularly preferably between approximately 10 fs and approximately 100 ps.

5. Component composite according to one of the preceding claims,
**characterized**
**in that** the first contact surface (3) is formed from metal and/or ceramic and/or plastic, in particular thermoplastic, or thermoset and/or semiconductor material and the second contact surface (5) is formed from thermoplastic or thermoset.

6. Component composite according to one of the preceding claims,
**characterized**
**in that** the component composite (2) is free of adhesion promoters, at least between the contact surfaces (3, 5).

7. Component composite according to one of the preceding claims,
**characterized**
**in that** the first and the second component (1, 4) have at least approximately equal coefficients of thermal expansion.

8. Component composite according to one of the preceding claims,
**characterized**
**in that** the first contact surface (3) is provided with the surface structure (6) over the entire surface area.

9. Component composite according to one of the preceding claims,
**characterized**
**in that** the component composite (2) is a component part of a fuel injection valve or of a lead frame, in particular in a control unit, in a sensor or in a plug, or a component part of a flexible conductor, or a component part of a ceramic part which has been encapsulated by injection moulding, in particular for a lambda probe, or of a bush which has been encapsulated with plastic by injection moulding, preferably for fastening a plastic housing, in particular of a control unit, of a sensor or of a plug.

10. Process for producing a component composite (2), preferably according to one of the preceding claims, comprising a first component (1) with a first contact surface (3) and at least one second component (4), wherein the first contact surface (3) is provided with a surface structure (6) by means of electromagnetic radiation, the surface structure (6) being produced in such a manner that it has a microstructure (7) overlaid by a nanostructure (10),
**characterized**
**in that**, after the surface structuring, the first component (1) is connected to the second component (4) in a positively locking manner by encapsulating the first component (1), at least in certain portions, with the second component (4) by injection moulding, wherein the second component (4) is formed at least in certain portions from plastic material, in particular a thermoplastic material.

11. Process according to Claim 10,
**characterized**
**in that** the surface structuring is produced under a process medium, in particular under a process gas atmosphere, preferably for passivation and/or increasing the efficiency.

12. Process according to either of Claims 10 and 11,
**characterized**
**in that** the surface structure (6) is produced using a laser with a pulse duration of between 100 fs and 100 ps.

13. Process according to one of the preceding Claims 10 to 12,
**characterized**
**in that** the structured first component (1) is stored under an inert gas atmosphere, in particular under a nitrogen atmosphere, until the second component (4) is joined, preferably also during the joining operation, in particular by encapsulation by injection moulding.

## Revendications

1. Elément composite, en particulier destiné à des applications sur des véhicules automobiles et comprenant un premier élément (1) doté d'une première surface de contact (3) et au moins un deuxième élément (4) doté d'une deuxième surface de contact (5) qui repose sur la première surface de contact (3),
la première surface de contact (3) présentant une structure de surface (6) formée au moyen d'un rayonnement électromagnétique et la structure de surface (6) présentant une nanostructure (10) superposée à une microstructure (7),
**caractérisé en ce que**
la deuxième surface de contact (5) et de préférence la totalité du deuxième élément (4) sont réalisés en matière synthétique et en particulier en matière synthétique thermoplastique et
**en ce qu'**au moins certaines parties du premier élément (1) sont englobées par le deuxième élément (4) de telle sorte que le premier élément (1) soit relié en correspondance géométrique au deuxième élément (4).

2. Elément composite selon la revendication 1, **caractérisé en ce que** la microstructure (7) présente des éléments (8) de microstructure d'un diamètre d'un ordre de grandeur d'environ 1 µm à environ 999 µm et/ou en ce que la nanostructure (10) présente des éléments (9) de nanostructure dont le diamètre est d'un ordre de grandeur compris entre environ 1 nm et environ 999 nm.

3. Elément composite selon l'une des revendications 1 ou 2, **caractérisé en ce que** la structure de surface (6) est formée au moyen d'un laser dont la durée des impulsions est comprise entre 100 fs et 100 ps, de préférence dans un environnement de fluide de processus et de préférence sous une atmosphère de gaz de processus.

4. Elément composite selon l'une des revendications précédentes, **caractérisé en ce que** la structure de surface (6) est formée à l'aide d'un rayonnement dont la longueur d'onde est comprise dans la plage d'environ 10 nm à environ 11 µm et de façon particulièrement préférable d'environ 200 nm à environ 1 500 nm et/ou à l'aide d'un rayonnement dont la durée des impulsions est comprise dans la plage de 100 fs à environ 10 µs et de façon particulièrement préférable de 10 fs à environ 100 ps.

5. Elément composite selon l'une des revendications précédentes, **caractérisé en ce que** la première surface de contact (3) est formée de métal, de céramique et/ou de matière synthétique, en particulier de matière synthétique thermoplastique, de matière plastique thermodurcissable et/ou d'un matériau semi-conducteur et **en ce que** la deuxième surface de contact (5) est formée d'une matière synthétique thermoplastique ou d'une matière synthétique thermodurcissable.

6. Elément composite selon l'une des revendications précédentes, **caractérisé en ce que** l'élément composite (2) ne présente pas d'agent de renforcement d'adhérence au moins entre les surfaces de contact (3, 5).

7. Elément composite selon l'une des revendications précédentes, **caractérisé en ce que** le premier et le deuxième élément (1, 4) présentent au moins approximativement les mêmes coefficients de dilatation thermique.

8. Elément composite selon l'une des revendications précédentes, **caractérisé en ce que** la première surface de contact (3) est dotée de la structure de surface (6) sur toute son extension.

9. Elément composite selon l'une des revendications précédentes, **caractérisé en ce que** l'élément composite (2) fait partie d'une soupape d'injection de carburant ou d'une grille estampée, en particulier dans un appareil de commande, dans un détecteur ou dans une fiche, ou fait partie d'un conducteur souple ou d'une pièce en céramique englobée, en particulier pour une sonde lambda, une douille enrobée de matière synthétique, de préférence destinée à fixer un boîtier en matière synthétique, en particulier un appareil de commande, une sonde ou une fiche.

10. Procédé de fabrication d'un élément composite (2) de préférence selon l'une des revendications précédentes, et comprenant un premier élément (1) qui présente une première surface de contact (3) et au moins un deuxième élément (4), la première surface de contact (3) étant dotée d'une structure de surface (6) à l'aide d'un rayonnement électromagnétique et la structure de surface (6) étant formée de telle sorte qu'elle présente une nanostructure (10) superposée à une microstructure (7),
**caractérisé en ce que**
après la structuration de surface, le premier élément (1) est relié au deuxième élément (4) en reliant au moins certaines parties du premier élément (1) au deuxième élément (4) en correspondance géométrique par encapsulation, au moins certaines parties du deuxième élément (4) étant formées d'une matière synthétique et en particulier d'un matériau thermoplastique.

11. Procédé selon la revendication 10, **caractérisé en ce que** la structuration de surface est formée dans un fluide de processus et en particulier dans une atmosphère gazeuse de processus, de préférence en vue d'une passivation et/ou d'une augmentation du rendement.

12. Procédé selon l'une des revendications 10 ou 11, **caractérisé en ce que** la structure de surface (6) est formée à l'aide d'un laser dont les impulsions ont une durée comprise entre 100 fs et 100 ps.

13. Procédé selon l'une des revendications 10 à 12 qui précèdent, **caractérisé en ce que** le premier élément structuré (1) est entreposé sous une atmosphère de gaz inerte et en particulier sous une atmosphère d'azote jusqu'à sa jonction au deuxième élément (4) et de préférence également pendant la jonction, en particulier par encapsulation.
